# EUROPEAN PATENT APPLICATION

(11) **EP 4 682 194 A1**
(43) Date of publication of application: **21.01.2026**
(21) Application number: 23927351.9
(22) Date of filing: 13.03.2023
(51) Int. Cl.: C08J 9/16

(54) **EXPANDED BEADS OF POLYPROPYLENE-BASED RESIN, AND EXPANDED BEAD MOLDED BODY**

(71) Applicant: JSP International SARL, 60190 Estrées-Saint-Denis (FR)
(72) Inventor: VEDIE, Laurianne, 60190 Estrees-Saint-Denis (FR); TROUILLET, Christophe, 60190 Estrees-Saint-Denis (FR); KOPF, Valentin, 60190 Estrees-Saint-Denis (FR); HIRA, Akinobu, Yokkaichi-shi, Mie 510-0881 (JP)
(74) Representative: Hafner & Kohl PartmbB
(86) International application number: PCT/JP2023/009555
(87) International publication number: WO 2024/189729

(57) **Abstract**

Polypropylene resin expanded beads including an expanded layer constituting the expanded beads, the expanded layer containing a polypropylene resin as a base resin, a cyclic phosphonate-based compound, and a NOR type hindered amine-based compound, the expanded layer having a blending amount of the cyclic phosphonate-based compound of 5 parts by mass or more and less than 25 parts by mass per 100 parts by mass of a resin component constituting the expanded layer, the expanded layer having a blending amount of the NOR type hindered amine-based compound of 0.1 part by mass or more and less than 5 parts by mass per 100 parts by mass of a resin component constituting the expanded layer, the expanded layer containing a phenol-based antioxidant, the expanding layer having a blending amount of the phenol-based antioxidant of 0.01 part by mass or more and less than 0.5 part by mass per 100 parts by mass of a resin component constituting the expanded layer, and a ratio of a blending amount of the phenol-based antioxidant with respect to a blending amount of the NOR type hindered amine-based compound is of 0.03 or more and 0.9 or less, and an expanded beads molded article obtained through in-mold molding of the expanded beads.

## Description

### TECHNICAL FIELD

The present invention relates to polypropylene resin expanded beads and an expanded beads molded article.

### BACKGROUND ART

An expanded beads molded article obtained through in-mold molding of polypropylene resin expanded beads is lightweight and is excellent in impact resistance, energy absorption characteristics, and the like, and therefore has been used for vehicle components, such as automobile bumpers.

With the spread of electric vehicles in recent years, there have been increasing applications thereof requiring high flame retardancy, such as a protective material for on-board batteries and electronic components. For the demand of high flame retardancy of a polypropylene resin expanded beads molded article, attempts have been made to impart flame retardancy to the molded article by adding a flame retardant to the expanded beads.

For example, PTL 1 intends to provide an expanded molded article excellent in flame retardancy, and describes polypropylene-based expanded beads containing a polypropylene resin, an organic phosphorus compound, and a hindered amine in particular amounts respectively, and an expanded molded article obtained by molding the beads.

### CITATION LIST

### PATENT LITERATURE

PTL 1: WO 2022/203035

### SUMMARY OF INVENTION

### TECHNICAL PROBLEM

In the technique of PTL 1, particular amounts of an organic phosphorus compound and a hindered amine are added to polypropylene resin expanded beads. However, in in-mold molding the expanded beads containing the particular amounts of these compounds, there are cases where the expanded beads are fusion bonded insufficiently, and there is a room for improvement in providing a polypropylene resin expanded beads molded article excellent in fusion bonding properties while achieving the excellent flame retardancy.

An object of the present invention is to provide polypropylene resin expanded beads that are capable of producing an expanded beads molded article excellent in flame retardancy and fusion bonding properties, and a polypropylene resin expanded beads molded article excellent in flame retardancy and fusion bonding properties.

### SOLUTION TO PROBLEM

As a result of earnest investigations by the present inventors, it has been found that the problem can be solved by blending a particular phosphonate-based compound, a particular hindered amine-based compound, and a particular antioxidant in polypropylene resin expanded beads and a molded article in particular amounts and a particular ratio respectively.

One embodiment of the present invention includes the following items [1] to [10].
[1] Polypropylene resin expanded beads including an expanded layer constituting the expanded beads, the expanded layer containing a polypropylene resin as a base resin, a cyclic phosphonate-based compound, and a NOR type hindered amine-based compound, the expanded layer having a blending amount of the cyclic phosphonate-based compound of 5 parts by mass or more and less than 25 parts by mass per 100 parts by mass of a resin component constituting the expanded layer, the expanded layer having a blending amount of the NOR type hindered amine-based compound of 0.1 part by mass or more and less than 5 parts per 100 parts by mass of a resin component constituting the expanded layer, the expanded layer containing a phenol-based antioxidant, the expanding layer having a blending amount of the phenol-based antioxidant of 0.01 part by mass or more and less than 0.5 part per 100 parts by mass of a resin component constituting the expanded layer, and a ratio of a blending amount of the phenol-based antioxidant with respect to a blending amount of the NOR type hindered amine-based compound is of 0.03 or more and 0.9 or less.
[2] The polypropylene resin expanded beads according to the item [1], in which the ratio of the blending amount of the phenol-based antioxidant with respect to the blending amount of the NOR type hindered amine-based compound is 0.07 or more and 0.9 or less.
[3] The polypropylene resin expanded beads according to the item [1], in which the ratio of the blending amount of the phenol-based antioxidant with respect to the blending amount of the NOR type hindered amine-based compound is 0.14 or more and 0.9 or less.
[4] The polypropylene resin expanded beads according to any one of the items [1] to [3], in which the blending amount of the NOR type hindered amine-based compound in the expanded layer is 0.1 part by mass or more and 3.5 parts by mass or less per 100 parts by mass of the resin component constituting the expanded layer.
[5] The polypropylene resin expanded beads according to any one of the items [1] to [4], in which the phenol-based antioxidant has a melting point Tm_{A} of 200°C or more and less than 300°C.
[6] The polypropylene resin expanded beads according to any one of the items [1] to [5], in which the cyclic phosphonate-based compound has a melting point Tm_{B} of 200°C or more and less than 300°C, and a melting point difference (Tm_{A}-Tm_{B}) between the melting point Tm_{A} of the phenol-based antioxidant and the melting point Tm_{B} of the cyclic phosphonate-based compound is -50°C or more and 50°C or less.
[7] The polypropylene resin expanded beads according to any one of the items [1] to [6], in which the cyclic phosphonate-based compound is a pentaerythritol diphosphonate.
[8] The polypropylene resin expanded beads according to any one of the items [1] to [7], in which the expanded layer contains a sulfur-based antioxidant, and a blending amount of the sulfur-based antioxidant in the expanded layer is 0.01 part by mass or more and 0.5 part by mass or less per 100 parts by mass of the resin component constituting the expanded layer.
[9] The polypropylene resin expanded beads according to the item [8], in which the expanded layer has a ratio of a blending amount of the NOR type hindered amine-based compound with respect to a blending amount of the sulfur-based antioxidant of 0.03 or more and 0.9 or less.
[10] An expanded beads molded article including the polypropylene resin expanded beads according to any one of the items [1] to [9] in-mold molded.

### ADVANTAGEOUS EFFECTS OF INVENTION

The present invention can provide polypropylene resin expanded beads that are capable of producing an expanded beads molded article excellent in flame retardancy and fusion bonding properties, and a polypropylene resin expanded beads molded article excellent in flame retardancy and fusion bonding properties.

### DESCRIPTION OF EMBODIMENT

### [Polypropylene Resin Expanded Beads]

The polypropylene resin expanded beads of the present invention are polypropylene resin expanded beads including an expanded layer constituting the expanded beads, the expanded layer contains a polypropylene resin as a base resin, a cyclic phosphonate-based compound, and a NOR type hindered amine-based compound, the expanded layer has a blending amount of the cyclic phosphonate-based compound of 5 parts by mass or more and less than 25 parts per 100 parts by mass of the resin component constituting the expanded layer, the expanded layer has a blending amount of the NOR type hindered amine-based compound of 0.1 part by mass or more and less than 5 parts per 100 parts by mass of the resin component constituting the expanded layer, the expanded layer contains a phenol-based antioxidant, and the expanded layer has a blending amount of the phenol-based antioxidant of 0.01 part by mass or more and less than 0.5 part per 100 parts by mass of the resin component constituting the expanded layer, and a ratio of the blending amount of the phenol-based antioxidant with respect to the blending amount of the NOR type hindered amine-based compound is of 0.03 or more and 0.9 or less.

### (Polypropylene Resin)

The polypropylene resin expanded beads (which may be hereinafter referred simply to as "expanded beads") have an expanded layer containing a polypropylene resin as a base resin (which may be hereinafter referred simply to as an "expanded layer"). In the case where a cover layer or the like is not provided in the expanded beads, generally, the entire expanded beads become the expanded layer, and in the case where a cover layer formed of a resin that is not expanded is provided, the expanded layer becomes a core layer of the expanded beads. In the description herein, the expression "the expanded layer containing a polypropylene resin as a base resin" means that content of the polypropylene resin in the resin component constituting the expanded layer is 70% by mass or more, preferably 80% by mass or more, more preferably 90% by mass or more, further preferably 95% by mass or more, and still further preferably 99% by mass or more. The upper limit thereof is not particularly limited, and is 100% by mass or less.

In the present invention, examples of the polypropylene resin include a propylene homopolymer, a propylene-based random copolymer, a propylene-based block copolymer, and an impact resistant polypropylene (block polypropylene) constituted by two or more phases including a continuous phase of a propylene polymer and a rubber phase of an ethylene-α-olefin copolymer or the like existing as a dispersed phase in the continuous phase. These resins each may be used alone, or a mixture of two or more kinds thereof may be used.

The expanded layer may contain an additional resin other than the polypropylene resin in such a range that does not impair the objects and the effects of the present invention. Examples of the additional resin include a thermoplastic resin other than the polypropylene resin, such as a polyethylene resin and a polystyrene resin, and an elastomer. The content of the additional resin component in the resin component constituting the expanded layer is preferably 20% by mass or less, more preferably 10% by mass or less, further preferably 5% by mass or less, and still further preferably 0% by mass. In other words, it is particularly preferred that the expanded layer contains substantially only the polypropylene resin as the resin component.

The content of the structural unit derived from propylene in the polypropylene resin is preferably 80% by mass or more, and more preferably 90% by mass or more. The content of the structural unit derived from propylene in the polypropylene resin is preferably 99% by mass or less, and more preferably 98% by mass or less.

Examples of the propylene-based random copolymer include a copolymer of propylene and ethylene and/or an α-olefin having 4 to 20 carbon atoms. Examples of the α-olefin include 1-butene, 1-pentene, 1-hexene, 1-octene, and 4-methyl-1-butene.

The polypropylene resin preferably contains an ethylene-propylene random copolymer, a propylene-butene random copolymer, an ethylene-propylene-butene random copolymer, or a mixture of two or more thereof, as a major component. In this case, the proportion of the propylene-based random copolymer in the polypropylene resin is preferably 60% by mass or more, more preferably 80% by mass or more, and further preferably 90% by mass or more.

In the case where the propylene-based random copolymer contains a component derived from ethylene (ethylene component) and/or a component derived from butene (butene component) as a copolymerization component, the total content of the ethylene component and the butene component in the propylene-based random copolymer is preferably 1% by mass or more, more preferably 2% by mass or more, and further preferably 3% by mass or more, from the standpoint of further enhancing the in-mold moldability of the expanded beads under a low molding pressure condition. The total content of the ethylene component and the butene component in the propylene-based random copolymer is preferably 15% by mass or less from the standpoint of steadily providing an expanded beads molded article having the good mechanical properties, such as the compression strength. Accordingly, the total content of the ethylene component and the butene component in the propylene-based random copolymer is preferably 1 to 15% by mass, more preferably 2 to 15% by mass, and further preferably 3 to 15% by mass. The content of the components derived from ethylene and α-olefin in the propylene-based random copolymer can be obtained through an IR spectrum measurement.

The melting point of the polypropylene resin is preferably 130°C or more, more preferably 135°C or more, and further preferably 140°C or more, from the standpoint of enhancing the mechanical properties of the resulting expanded beads molded article. The melting point of the polypropylene resin is preferably 155°C or less, more preferably 150°C or less, and further preferably 146°C or less, from the standpoint of enhancing the in-mold moldability of the expanded beads under a low molding pressure condition. Accordingly, the melting point of the polypropylene resin is preferably 130°C to 155°C, more preferably 135°C to 150°C, and further preferably 140°C to 146°C.

The melting point of the polypropylene resin is measured in accordance with JIS K 7121:2012 using the propylene resin or the expanded beads as a test piece. Specifically, the section "(2) When the melting temperature is measured after a certain heat treatment" is adopted as the conditioning of the test piece, and under a condition with a nitrogen inflow rate of 30 mL/min, the test piece is heated from 23°C to 200°C at a heating rate of 10°C/min, maintained at the temperature for 10 minutes, cooled to 23°C at a cooling rate of 10°C/min, and heated again to 200°C at a heating rate of 10°C/min, so as to provide a DSC curve (DSC curve in the second heating). Subsequently, the peak temperature of the melting peak in the DSC curve is determined, and the value thereof is designated as the melting point of the polypropylene resin. In the case where multiple melting peaks appear in the DSC curve, the peak temperature of the melting peak having the highest height of the melting peak based on the baseline is designated as the melting point.

The melt flow rate (MFR) of the polypropylene resin is preferably 2 g/10 min or more, and more preferably 5 g/10 min or more, from the standpoint of enhancing the expandability in expanding the resin particles and the standpoint of enhancing the secondary expandability of the expanded beads in in-mold molding, and is preferably 15 g/10 min or less, and more preferably 10 g/10 min or less, from the standpoint of enhancing the homogeneity of the foam cells of the expanded beads and the standpoint of enhancing the properties of the expanded beads molded article. Accordingly, the MFR of the polypropylene resin is preferably 2 to 15 g/10 min, and more preferably 5 to 10 g/10 min.

The MFR of the polypropylene resin is measured in accordance with JIS K 7210-1:2014 under a condition of a temperature of 230°C and a load of 2.16 kg.

The polydispersity (Mw/Mn) of the polypropylene resin is preferably 4.0 or more and 25 or less, and more preferably 4.1 or more and 15 or less.

The polydispersity (Mw/Mn) of the polypropylene resin is a value obtained by dividing the weight average molecular weight (Mw) by the number average molecular weight (Mn) measured through the gel permeation chromatography (GPC) with polystyrene as the standard substance.

The polydispersity (Mw/Mn) of the polypropylene resin is measured through the gel permeation chromatography (GPC). Specifically, the polypropylene resin is dissolved in o-dichlorobenzene to prepare a sample solution having a concentration of 2.2 mg/mL. A chromatogram is obtained by measuring the sample solution under a condition of columns of TSKgel (registered trade name) GMH6-HT × 2 and TSKgel GMH6-HTL × 2, an eluent of o-chlorobenzene, a flow rate of 1.0 mL/min, and a temperature of 140°C. The number average molecular weight Mn and the weight average molecular weight Mw of the polypropylene resin are calculated with polystyrene as the standard substance, and then the polydispersity (Mw/Mn) is obtained. The measurement device used may be a high-temperature GPC device HLC-8321GPC/HT, available from Tosoh Corporation.

It is preferred that the MFR of the polypropylene resin contained in the base resin is 5 g/10 min or more and 10 g/10 min or less, and the polydispersity (Mw/Mn) thereof is 4.0 or more and 25 or less, from the standpoint of enhancing the expandability of the expanded beads in the production process thereof and the secondary expandability of the expanded beads in in-mold molding.

The polypropylene resin expanded beads of the present invention include the expanded layer containing a cyclic phosphonate-based compound, a NOR type hindered amine-based compound, and a phenol-based antioxidant in particular amounts, and furthermore have a ratio of the blending amount of the blending amount of the NOR type hindered amine-based compound with respect to the phenol-based antioxidant within a particular range, and thereby an expanded beads molded article excellent in flame retardancy and fusion bonding properties can be obtained through in-mold molding of the polypropylene resin expanded beads of the present invention.

### (Cyclic Phosphonate-based Compound)

The cyclic phosphonate-based compound is a compound that includes one or more cyclic phosphonate moiety in the molecule thereof, and is preferably at least one kind selected from the group consisting of a compound represented by the following general formula (1), a compound represented by the following general formula (2), a compound represented by the following general formula (3), and a compound represented by the following general formula (4), and more preferably a pentaerythritol diphosphonate represented by the following general formula (1). The pentaerythritol diphosphonate represented by the following general formula (1) is a spirocyclic compound including two cyclic phosphonate moieties in the molecule thereof. One kind of the cyclic phosphonate-based compound may be used alone, or two or more kinds thereof may be used in combination.

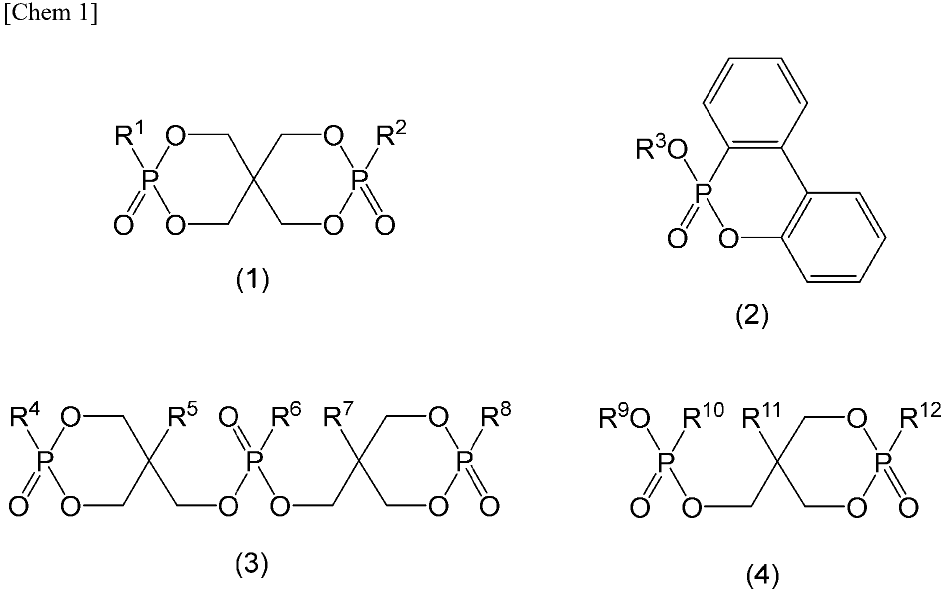

In the formulae, R¹ and R² each represent an alkyl group having 1 to 10 carbon atoms, an alkenyl group having 2 to 10 carbon atoms, a benzyl group, a phenylethyl group, a phenyl group, or a naphthyl group; R³ represents an alkyl group having 1 to 22 carbon atoms or an aryl group having 6 to 15 carbon atoms; R⁴, R⁸, R⁹, and R¹² each represent an alkyl group having 1 to 4 carbon atoms; R⁵, R⁷, and R¹¹ each represent a hydrogen atom or an alkyl group having 1 to 4 carbon atoms; and R⁶ and R¹⁰ each represent an alkyl group having 1 to 22 carbon atoms, a cycloalkyl group having 9 to 22 carbon atoms, an aryl group having 9 to 22 carbon atoms, or an aralkyl group having 9 to 22 carbon atoms.

In the formula (1), R¹ and R² may be the same as or different from each other, and are preferably the same as each other.

R¹ represents an alkyl group having 1 to 10 carbon atoms, an alkenyl group having 2 to 10 carbon atoms, a benzyl group, a phenylethyl group, a phenyl group, or a naphthyl group, preferably an alkyl group having 1 or 2 carbon atoms, and more preferably a methyl group.

R² represents an alkyl group having 1 to 10 carbon atoms, an alkenyl group having 2 to 10 carbon atoms, a benzyl group, a phenylethyl group, a phenyl group, or a naphthyl group, preferably an alkyl group having 1 or 2 carbon atoms, and more preferably a methyl group.

According to the above, in the compound represented by the formula (1), a compound, in which any of R¹ and R² represents a methyl group, is further preferred.

In the formula (2), R³ represents an alkyl group having 1 to 22 carbon atoms or an aryl group having 6 to 15 carbon atoms, and preferably a phenyl group.

In the formula (3), R⁴ and R⁸ may be the same as or different from each other, and are preferably the same as each other.

R⁴ represents an alkyl group having 1 to 4 carbon atoms, and preferably a methyl group.

R⁸ represents an alkyl group having 1 to 4 carbon atoms, and preferably a methyl group.

In the formula (3), R⁵ and R⁷ may be the same as or different from each other, and are preferably the same as each other.

R⁵ represents a hydrogen atom or an alkyl group having 1 to 4 carbon atoms, and preferably an ethyl group.

R⁷ represents a hydrogen atom or an alkyl group having 1 to 4 carbon atoms, and preferably an ethyl group.

R⁶ represents an alkyl group having 1 to 22 carbon atoms, a cycloalkyl group having 9 to 22 carbon atoms, an aryl group having 9 to 22 carbon atoms, or an aralkyl group having 9 to 22 carbon atoms, and preferably a linear alkyl group having 1 to 12 carbon atoms.

In the formula (4), R⁹ and R¹² may be the same as or different from each other, and are preferably the same as each other.

R⁹ represents an alkyl group having 1 to 4 carbon atoms, and preferably a methyl group.

R¹² represents an alkyl group having 1 to 4 carbon atoms, and preferably a methyl group.

R¹⁰ represents an alkyl group having 1 to 22 carbon atoms, a cycloalkyl group having 9 to 22 carbon atoms, an aryl group having 9 to 22 carbon atoms, or an aralkyl group having 9 to 22 carbon atoms, and preferably a linear alkyl group having 1 to 12 carbon atoms.

R¹¹ represents a hydrogen atom or an alkyl group having 1 to 4 carbon atoms, and preferably an ethyl group.

The melting point Tm_{A} of the cyclic phosphonate-based compound is preferably 80°C or more and 350°C or less, more preferably 150°C or more and 330°C or less, and further preferably 200°C or more and 300°C or less.

The melting point Tm_{A} of the cyclic phosphonate-based compound is measured in accordance with JIS K 0064:1992.

The blending amount of the cyclic phosphonate-based compound in the expanded layer of the polypropylene resin expanded beads of the present invention is 5 parts by mass or more and less than 25 parts per 100 parts by mass of the resin component constituting the expanded layer. In the case where the blending amount of the cyclic phosphonate-based compound is too small, an expanded beads molded article having high flame retardancy cannot be obtained. The blending amount of the cyclic phosphonate-based compound in the expanded layer is preferably 6 parts by mass or more, more preferably 7 parts by mass or more, and further preferably 8 parts by mass or more, per 100 parts by mass of the resin component constituting the expanded layer, from the standpoint of providing an expanded beads molded article having higher flame retardancy. In the case where the blending amount thereof is too large, on the other hand, an expanded beads molded article having excellent fusion bonding properties cannot be obtained. The blending amount of the cyclic phosphonate-based compound in the expanded layer is preferably 22 parts by mass or less, more preferably 20 parts by mass or less, and further preferably 17 parts by mass or less, per 100 parts by mass of the resin component constituting the expanded layer, from the standpoint of providing an expanded beads molded article having further excellent fusion bonding properties. Accordingly, the blending amount of the cyclic phosphonate-based compound in the expanded layer is preferably 6 parts by mass or more and 22 parts by mass or less, more preferably 7 parts by mass or more and 20 parts by mass or less, and further preferably 8 parts by mass or more and 17 parts by mass or less, per 100 parts by mass of the resin component constituting the expanded layer.

### (NOR type Hindered Amine-based Compound)

The NOR type hindered amine-based compound can enhance the flame retardancy of the molded article due to the presence of a 2,2,6,6-tetramethyl-4-piperidineamine moiety that has a hydrocarbon group bonded to the nitrogen atom via an oxygen atom in the structure thereof shown by the following formula (5).

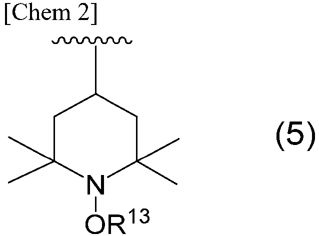

In the formula (I), R¹³ represents a hydrocarbon group.

In the general formula (5), R¹³ represents a hydrocarbon group, and in the case where one molecule of the hindered amine-based compound includes two or more hindered amine moieties represented by the formula (5), the multiple groups represented by R¹³ may be the same as or different from each other, and the multiple groups represented by R¹³ are preferably the same as each other.

R¹³ preferably represents at least one kind selected from the group consisting of an alkyl group and a cycloalkyl group, and more preferably represents a cycloalkyl group.

In the case where R¹³ represents an alkyl group, R¹³ more preferably represents an alkyl group having 1 to 20 carbon atoms, and further preferably represents an undecyl group.

In the case where R¹³ represents a cycloalkyl group, R¹³ more preferably represents a cycloalkyl group having 4 to 10 carbon atoms, and further preferably represents a cyclohexyl group.

One kind of the NOR type hindered amine-based compound may be used alone, or two or more kinds thereof may be used in combination.

The molecular weight of the NOR type hindered amine-based compound is preferably 600 or more, and more preferably 1,500 or more, from the standpoint of suppressing the bleed out from the molded article. The molecular weight of the NOR type hindered amine-based compound is preferably 3,000 or less, and more preferably 2,500 or less, from the standpoint of the favorable dispersion of the NOR type hindered amine-based compound in the resin.

The number of the 2,2,6,6-tetramethyl-4-piperidineamine moiety that has a hydrocarbon group bonded to the nitrogen atom via an oxygen atom represented by the general formula (5) in the NOR type hindered amine-based compound is preferably 2 or more and 8 or less, more preferably 2 or more and 6 or less, and further preferably 2 or 6.

The blending amount of the hindered amine-based compound in the expanded layer of the polypropylene resin expanded beads of the present invention is 0.1 part by mass or more and less than 5 parts per 100 parts by mass of the resin component constituting the expanded layer. In the case where the blending amount of the hindered amine-based compound is too small, an expanded beads molded article having high flame retardancy cannot be obtained. The blending amount of the hindered amine-based compound in the expanded layer is preferably 0.2 part by mass or more, more preferably 0.3 part by mass or more, and further preferably 0.4 part by mass or more, per 100 parts by mass of the resin component constituting the expanded layer, from the standpoint of providing an expanded beads molded article having higher flame retardancy. In the case where the blending amount thereof is too large, on the other hand, an expanded beads molded article having excellent fusion bonding properties cannot be obtained. The blending amount of the hindered amine-based compound in the expanded layer is preferably 3.5 parts by mass or less, more preferably 3 parts by mass or less, further preferably 2 parts by mass or less, and still further preferably 1 part by mass or less, per 100 parts by mass of the resin component constituting the expanded layer, from the standpoint of providing an expanded beads molded article having further excellent fusion bonding properties. Accordingly, the blending amount of the hindered amine-based compound in the expanded layer is preferably 0.2 part by mass or more and 3.5 parts by mass or less, more preferably 0.3 part by mass or more and 3 parts by mass or less, further preferably 0.4 part by mass or more and 2 parts by mass or less, and still further preferably 0.4 part by mass or more and 1 part by mass or less.

### (Phenol-based Antioxidant)

The phenol-based antioxidant is an antioxidant having in the molecule thereof one or more phenol structure having one or more hydroxy group bonded to an aromatic ring, and preferably has two or more phenol structures in the molecule thereof, and more preferably three or more phenol structures in the molecule thereof. The decomposition of the resin may occur within a relatively short period of time at a high temperature (for example, 180°C or more) in the process of melt-kneading the resin or the like, and the phenol-based antioxidant is a compound that suppresses the decomposition of the resin within a short period of time at a high temperature.

Specific examples of the phenol-based antioxidant include 1,3,5-trimethyl-2,4,6-tris(3',5'-di-tert-butyl-4'-hydroxybenzyl)benzene, 2,6-di-tert-butyl-p-cresol, triethylene glycol bis[3-(3-tert-butyl-5-methyl-4-hydroxyphenyl)propionate], 2,2-methylene-bis(4-methyl-6-tert-butylphenol), 1,6-hexanediol bis[3-(3,5-di-tert-butyl-4-hydroxyphenyl)propionate], and pentaerythritol tetrakis[3-(3,5-di-tert-butyl-4-hydroxyphenyl)propionate].

These may be used alone, or two or more kinds thereof may be used in combination. Among these, pentaerythritol tetrakis[3-(3,5-di-tert-butyl-4-hydroxyphenyl)propionate] and 1,3,5-trimethyl-2,4,6-tris(3',5'-di-tert-butyl-4'-hydroxybenzyl)benzene are preferred, and 1,3,5-trimethyl-2,4,6-tris(3',5'-di-tert-butyl-4'-hydroxybenzyl)benzene is particularly preferred, from the standpoint of enhancing the flame retardancy.

The melting point Tm_{B} of the phenol-based antioxidant is preferably 50°C or more and 350°C or less, more preferably 80°C or more and 330°C or less, further preferably 100°C or more and 320°C or less, still further preferably 150°C or more and 310°C or less, and still more further preferably 200°C or more and 300°C or less, from the standpoint of providing an expanded beads molded article having higher flame retardancy.

The melting point Tm_{B} of the phenol-based antioxidant is measured in accordance with JIS K 0064:1992.

The melting point difference (Tm_{A}-Tm_{B}) between the melting point Tm_{A} of the cyclic phosphonate-based compound and the melting point Tm_{B} of the phenol-based antioxidant is preferably -150°C or more and 150°C or less, more preferably -100°C or more and 100°C or less, and further preferably -50°C or more and 50°C or less, from the standpoint of providing an expanded beads molded article having higher flame retardancy.

The melting point difference (Tm_{A}-Tm_{B}) can be obtained from the melting point Tm_{A} of the cyclic phosphonate-based compound and the melting point Tm_{B} of the phenol-based antioxidant measured by the method described above.

The blending amount of the phenol-based antioxidant in the expanded layer of the polypropylene resin expanded beads of the present invention is 0.01 part by mass or more and less than 0.5 part per 100 parts by mass of the resin component constituting the expanded layer. In the case where the blending amount of the phenol-based antioxidant is too small, an expanded beads molded article having high flame retardancy and good fusion bonding properties cannot be obtained. The blending amount of the phenol-based antioxidant in the expanded layer is preferably 0.02 part by mass or more, more preferably 0.04 part by mass or more, further preferably 0.06 part by mass or more, and still further preferably 0.08 part by mass or more, per 100 parts by mass of the resin component constituting the expanded layer, from the standpoint of providing an expanded beads molded article having higher flame retardancy. In the case where the blending amount thereof is too large, an expanded beads molded article having high flame retardancy and good fusion bonding properties cannot be obtained. The blending amount of the phenol-based compound in the expanded layer is preferably 0.4 part by mass or less, more preferably 0.3 part by mass or less, further preferably 0.2 part by mass or less, and still further preferably 0.15 part by mass or less, per 100 parts by mass of the resin component constituting the expanded layer, from the standpoint of providing an expanded beads molded article having further excellent fusion bonding properties. Accordingly, the blending amount of the phenol-based antioxidant in the expanded layer is preferably 0.02 part by mass or more and 0.4 part by mass or less, more preferably 0.04 part by mass or more and 0.3 part by mass or less, further preferably 0.06 part by mass or more and 0.2 part by mass or less, and still further preferably 0.08 part by mass or more and 0.15 part by mass or less.

The ratio of the blending amount of the phenol-based antioxidant with respect to the blending amount of the NOR type hindered amine-based compound (phenol-based antioxidant/NOR type hindered amine-based compound) (blending ratio) is 0.03 or more and 0.9 or less. In the case where the ratio of the blending amounts is too small, an expanded beads molded article achieving both high flame retardancy and good fusion bonding properties simultaneously cannot be obtained. The ratio of the blending amounts is preferably 0.07 or more, more preferably 0.11 or more, and further preferably 0.14 or more, from the standpoint of providing an expanded beads molded article having higher flame retardancy and excellent fusion bonding properties. In the case where the ratio of the blending amounts is too large, on the other hand, an expanded beads molded article having high flame retardancy cannot be obtained. The ratio of the blending amounts is preferably 0.8 or less, more preferably 0.7 or less, and further preferably 0.6 or less, from the standpoint of providing an expanded beads molded article having higher flame retardancy. Accordingly, the ratio of the blending amount of the phenol-based antioxidant with respect to the blending amount of the NOR type hindered amine-based compound is preferably 0.07 or more and 0.8 or less, more preferably 0.11 or more and 0.7 or less, and further preferably 0.14 or more and 0.6 or less.

With the ratio of the blending amounts within the range, the expanded beads become capable of producing an expanded beads molded article excellent in flame retardancy and fusion bonding properties. The mechanism therefor may be unclear, but can be considered as follows.

The NOR type hindered amine-based compound has a 2,2,6,6-tetramethyl-4-piperidineamine moiety that has a hydrocarbon group bonded to the nitrogen atom via an oxygen atom as described above, and thereby it is considered that the combination use thereof with the cyclic phosphonate-based compound imparts a high flame retardancy to the expanded beads molded article. However, a large amount of the NOR type hindered amine-based compound contained in the expanded beads deteriorates the fusion bonding properties of the molded article. On the other hand, a too small amount of the NOR type hindered amine-based compound blended fails to impart the high flame retardancy to the expanded beads molded article.

In the present invention, the phenol-based antioxidant is used in the particular amount and the particular ratio in combination with the NOR type hindered amine-based compound, and thereby a high flame retardancy can be imparted to the expanded beads molded article even through the blending amount of the NOR type hindered amine-based compound is in a small range.

As described above, with the use of the phenol-based antioxidant in the particular amount and the particular ratio in combination with the NOR type hindered amine-based compound, the phenol-based antioxidant can contribute to the enhancement of the flame retardancy without impairing the effect of enhancing the flame retardancy by the NOR type hindered amine-based compound. Accordingly, it is considered that the high flame retardancy can be imparted to the expanded beads molded article even though the blending amount of the NOR type hindered amine-based compound is reduced. Furthermore, the phenol-based antioxidant does not easily inhibit the fusion of the expanded beads in in-mold molding, it is also possible to reduce the blending amount of the NOR type hindered amine-based compound. Accordingly, it is considered that the expanded beads can be sufficiently fused in in-mold molding. Consequently, it is considered that the in-mold molding of the expanded beads of the present invention can provide an expanded beads molded article that has high flame retardancy and also has excellent fusion bonding properties.

### (Sulfur-based Antioxidant)

The expanded layer of the polypropylene resin expanded beads of the present invention preferably contains a sulfur-based antioxidant.

Examples of the sulfur-based antioxidant include an ester having a sulfide bond in the molecule thereof. Specific examples of the ester having a sulfide bond in the molecule thereof include didodecyl 3,3'-thiodipropionate, ditridecyl 3,3'-thiodipropionate, ditetradecyl 3,3'-thiodipropionate, dioctadecyl 3,3'-thiodipropionate, pentaerythritol tetrakis(3-dodecylthiopropionate), pentaerythritol tetrakis(3-tridecylthiopropionate), pentaerythritol tetrakis(3-tetradecylthiopropionate), and pentaerythritol tetrakis(3-octadecylthiopropionate).

These may be used alone, or two or more kinds thereof may be used in combination.

The blending amount of the sulfur-based antioxidant in the expanded layer of the polypropylene resin expanded beads of the present invention is preferably 0.02 part by mass or more, more preferably 0.04 part by mass or more, further preferably 0.06 part by mass or more, and still further preferably 0.08 part by mass or more, per 100 parts by mass of the resin component constituting the expanded layer in order to produce an expanded beads molded article having excellent mechanical properties, such as compression properties, even in the case where the molded article is placed in a high temperature environment for a prolonged period of time. The blending amount of the sulfur-based compound in the expanded layer is preferably 0.4 part by mass or less, more preferably 0.3 part by mass or less, further preferably 0.2 part by mass or less, and still further preferably 0.15 part by mass or less, per 100 parts by mass of the resin component constituting the expanded layer, from the standpoint of providing an expanded beads molded article having high flame retardancy.

The ratio of the blending amount of the sulfur-based antioxidant with respect to the blending amount of the NOR type hindered amine-based compound (sulfur-based antioxidant/NOR type hindered amine-based compound) (blending ratio) is preferably 0.03 or more, more preferably 0.07 or more, and further preferably 0.14 or more, from the standpoint of imparting excellent mechanical properties, such as compression properties, to an expanded beads molded article even in the case where the molded article is placed in a high temperature environment for a prolonged period of time. The blending ratio is preferably 0.9 or less, more preferably 0.8 or less, and further preferably 0.7 or less, from the standpoint of providing an expanded beads molded article having high flame retardancy. Accordingly, the ratio of the blending amount of the sulfur-based antioxidant with respect to the blending amount of the NOR type hindered amine-based compound is preferably 0.03 or more and 0.9 or less, more preferably 0.07 or more and 0.8 or less, and further preferably 0.14 or more and 0.7 or less.

### (Characteristics and Composition of Polypropylene Resin Expanded Beads)

The polypropylene resin expanded beads of the present invention contain the cyclic phosphonate-based compound, the NOR type hindered amine-based compound, and the phenol-based antioxidant in the particular amounts as described above, and preferably have the following characteristics.

The average cell diameter of the expanded layer of the polypropylene resin expanded beads of the present invention is preferably 50 µm or more and 250 µm or less. The average cell diameter of the expanded layer of the polypropylene resin expanded beads of the present invention is more preferably 60 µm or more, and further preferably 65 µm or more. The average cell diameter of the expanded layer of the polypropylene resin expanded beads of the present invention is more preferably 200 µm or less, further preferably 150 µm or less, and still further preferably 120 µm or less. Accordingly, the average cell diameter of the expanded layer is more preferably 60 µm or more and 200 µm or less, further preferably 65 µm or more and 150 µm or less, and still further preferably 65 µm or more and 120 µm or less. In the case where the average cell diameter of the expanded layer is in this range, the expanded beads have excellent in-mold moldability, and the in-mold molding of the expanded beads can provide an expanded beads molded article having further excellent mechanical properties.

The average cell diameter can be measured in the following manner: in an enlarged photograph of the cross section of the expanded bead divided into two, a line is drawn from the outer edge of the cell located on the outermost surface side of the expanded bead through the center to the outer edge of the cell located on the outermost surface side of the opposite side, and the number of cells intersecting the line is divided by the length of the line, and specifically can be measured by the method shown in the examples.

The average cell diameter of the expanded layer can be regulated to the intended range by adjusting the kind and the amount of the cell controlling agent added to the resin particles, and the amounts of the cyclic phosphonate-based compound and the hindered amine-based compound added, by adjusting the expanding pressure in expanding the resin particles, etc.

The bulk density of the polypropylene resin expanded beads of the present invention is preferably 10 g/L or more and 500 g/L or less. The bulk density of the polypropylene resin expanded beads of the present invention is more preferably 20 g/L or more, and further preferably 30 g/L or more. The bulk density of the polypropylene resin expanded beads of the present invention is more preferably 100 g/L or less, further preferably 70 g/L or less, and still further preferably 60 g/L or less. Accordingly, the bulk density of the polypropylene resin expanded beads of the present invention is more preferably 20 g/L or more and 100 g/L or less, further preferably 30 g/L or more and 70 g/L or less, and still further preferably 30 g/L or more and 60 g/L or less. A bulk density of the expanded beads that is in the range is preferred since an expanded beads molded article that is lightweight and has excellent fusion bonding properties can be obtained.

The bulk density is measured by the method shown in the examples.

The polypropylene resin expanded beads of the present invention preferably have one or more melting peaks (high temperature peaks) on the high temperature side of the melting peak intrinsic to the polypropylene resin (resin intrinsic peak), on a DSC curve by the differential scanning calorimetry (DSC) measured according to JIS K 7122-2012.

The melting peaks can be obtained according to the following method.

Specifically, with a differential scanning calorimeter, 1 to 3 mg of the expanded beads are heated from 23°C to 200°C at a heating rate of 10°C/min to provide a DSC curve, and the melting peak (high temperature peak) can be confirmed on the DSC curve. A peak having the maximum heat of fusion is designated as a melting peak intrinsic to the polypropylene resin (resin intrinsic peak), and a melting peak appearing on the higher temperature side is designated as a high-temperature peak.

The DSC curve in this case means a DSC curve obtained by heating the expanded beads according to the aforementioned measurement method (DSC curve in the first heating). An endothermic peak intrinsic to resin (resin intrinsic peak) means an endothermic peak by melting the crystals intrinsic to the polypropylene resin constituting the expanded beads. It is considered that the resin intrinsic peak is an endothermic peak due to absorption of heat through the melting of crystals that the polypropylene resin constituting the expanded beads generally has.

On the other hand, the endothermic peak (high temperature peak) on the high temperature side of the resin intrinsic peak is an endothermic peak appearing on the higher temperature side than the resin intrinsic peak on the first DSC curve. In the case where the high temperature peak appears, it is estimated that secondary crystals may exist in the resin. On the DSC curve (DSC curve on the second heating) obtained by heating the expanded beads from 23°C to 200°C at a heating rate of 10°C/min (first heating), then cooling from 200°C to 23°C at a cooling rate of 10°C/min, and then again heating from 23°C to 200°C at a heating rate of 10°C/min (second heating), only an endothermic peak appears through the melting of the crystals intrinsic to the polypropylene resin constituting the expanded beads. The resin intrinsic peak appears on the DSC curve in the first heating and also on the DSC curve in the second heating, and the peak temperature thereof may slightly differ between the first time and the second time, but the difference is generally less than 5°C. According to this manner, it can be confirmed that which peak is the resin intrinsic peak.

The expanded beads are preferably expanded beads that have only a melting peak (intrinsic peak) intrinsic to the polypropylene resin appearing on the DSC curve obtained in the second heating in heating the expanded beads from 23°C to 200°C at a heating rate of 10°C/min, then cooling them from 200°C to 23°C at a cooling rate of 10°C/min, and then again heating them from 23°C to 200°C at a heating rate of 10°C/min.

The heat of fusion at the high temperature peak of the polypropylene resin expanded beads of the present invention is preferably 5 to 40 J/g, more preferably 10 to 30 J/g, and further preferably 15 to 25 J/g, since the molding condition range capable of providing a favorable expanded beads molded article in in-mold molding of the expanded beads is broadened.

The heat of fusion at the high temperature peak can be measured according to the aforementioned method, and more specifically, can be measured according to the method shown in the examples.

The average mass per one bead (arithmetic average per one bead calculated by measuring the mass of 200 randomly selected beads) of the polypropylene resin expanded beads of the present invention is preferably 0.1 to 20 mg, more preferably 0.2 to 10 mg, further preferably 0.3 to 5 mg, still further preferably 0.4 to 2 mg.

The expanded layer of the polypropylene resin expanded beads of the present invention may contain an additional additive added thereto in such an extent that does not impair the effects of the present invention. Examples of the additional additive include various known additives, such as an additional antioxidant, an ultraviolet ray absorbent, an additional light stabilizer, an antistatic agent, a pigment, a dye, a filler, a conductive filler, and a cell controlling agent. The additives may be blended in the expanded beads, for example by adding in the process of producing the resin particles.

Examples of the cell controlling agent include a metal borate, a polyhydric alcohol, such as glycerin, polyethylene glycol, and pentaerythritol, and an aliphatic alcohol, such as cetyl alcohol and stearyl alcohol. A metal borate, such as zinc borate and magnesium borate, is preferably used, and zinc borate is more preferably used. The blending amount of the metal borate contained in the resin portion forming the expanded layer is preferably 0.005 part by mass or more and 0.5 part by mass or less, more preferably 0.01 part by mass or more and 0.2 part by mass or less, and further preferably 0.015 part by mass or more and 0.15 part by mass or less, per 100 parts by mass of the resin portion for forming the expanded layer. Accordingly, the blending amount of the metal borate in the expanded layer of the polypropylene resin expanded beads is preferably 0.005 part by mass or more and 0.5 part by mass or less, more preferably 0.01 part by mass or more and 0.2 part by mass or less, and further preferably 0.015 part by mass or more and 0.15 part by mass or less, per 100 parts by mass of the resin component constituting the expanded layer.

In the case where zinc borate is used, the number-based arithmetic average particle diameter thereof is preferably 0.5 µm or more and 15 µm or less, and more preferably 1 µm or more and 10 µm or less.

The number-based arithmetic average particle diameter of zinc borate is obtained in such a manner that the volume-based particle size distribution thereof measured by the laser diffraction scattering method is converted to the number-based particle size distribution on the assumption that the shape of the particles is spherical, and the particle diameters based on the number-based particle size distribution are arithmetically averaged. The particle diameter means the diameter of the hypothetical sphere having the same volume as the particle.

The polypropylene resin expanded beads of the present invention may contain a pigment and a dye as a colorant for the purpose of imparting color, such as chromatic color, black, or gray.

The pigment for chromatic color may be a red pigment, a blue pigment, a green pigment, a yellow pigment, or a violet pigment. The pigment for chromatic color may be either an inorganic pigment or an organic pigment. Examples of the inorganic pigment include a chromate salt, such as chrome yellow, zinc yellow, and barium yellow, a ferrocyanide, such as iron blue, a sulfide, such as cadmium yellow and cadmium red, an oxide, such as red iron oxide, and a silicate, such as ultramarine blue. Examples of the organic pigment include an azo pigment, such as a monoazo pigment, a disazo pigment, azo lake, a condensed azo pigment, and a chelate azo pigment, a polycyclic pigment, such as phthalocyanine based, anthraquinone based, perylene based, perinone based, thioindigo based, quinacridone based, dioxazine based, isoindolinone based, and quinophthalone based.

The pigment used is preferably iron oxide, titanium black, or carbon black, from the standpoint of imparting a black or gray appearance uniformly to an expanded beads molded article. Examples of the carbon black used include channel black, roller black, furnace black, thermal black, and acetylene black.

In the case where the pigment is blended in the expanded beads, the blending amount of the pigment in the expanded layer is preferably 0.01 part by mass or more and 5 parts by mass or less per 100 parts by mass of the resin component constituting the expanded layer from the standpoint of uniformly coloring without impairing the flame retardancy. The blending amount thereof is more preferably 0.05 part by mass or more, further preferably 0.1 part by mass or more, and still further preferably 0.5 part by mass or more, from the standpoint of providing an expanded beads molded article more uniformly colored. The blending amount thereof is more preferably 4 parts by mass or less, and further preferably 3 parts by mass or less, from the standpoint of providing an expanded beads molded article having higher flame retardancy.

In imparting color to the expanded beads molded article with the pigment, for the purpose of regulating the brightness of the color imparted to the molded article, and allowing the appearance of the molded article to be uniform, carbon black, titanium oxide, talc, calcium carbonate, magnesium hydroxide, and magnesium carbonate may be used in combination in addition to the pigment.

The polypropylene resin expanded beads of the present invention may contain an ultraviolet ray absorbent. Examples of the ultraviolet ray absorbent include a benzophenone-based compound, a benzotriazole-based compound, a triazine-based compound, and a benzoate-based compound. Examples of the benzophenone-based compound include 2-hydroxy-4-octyloxybenzophenone; examples of the benzotriazole-based compound include 2-(5-methyl-2-hydroxyphenyl)benzotriazole, 2-[2-hydroxy-3,5-bis(α,α-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, and 2-(2'-hydroxy-5'-t-octylphenyl)benzotriazole; examples of the triazine-based compound include 2-[4,6-diphenyl-1,3,5-triazin-2-yl]-5-(hexyloxy)phenol and 2-[4,6-bis(2,4-dimethylphenyl)-1,3,5-triazin-2-yl)-5-(n-octyloxy)phenol; and examples of the benzoate-based compound include 2,4-di-tert-butylphenyl 3,5-di-tert-butyl-4-hydroxybenzoate and hexadecyl 3,5-di-tert-butyl-4-hydroxybenzoate.

The blending amount of the ultraviolet ray absorbent in the expanded layer is preferably 0.01 part by mass or more and 2 parts by mass or less, more preferably 0.05 part by mass or more and 1 part by mass or less, and further preferably 0.1 part by mass or more and 0.8 part by mass or less, per 100 parts by mass of the resin component constituting the expanded layer.

The ultraviolet ray absorbent is a compound that has the property of absorbing an ultraviolet ray, and is a compound that can absorb mainly light having a wavelength of 300 to 400 µm.

The polypropylene resin expanded beads of the present invention may contain an additional light stabilizer. Examples of the light stabilizer include a non-NOR type hindered amine-based compound. The non-NOR type hindered amine-based compound is a compound having a 2,2,6,6-tetramethyl-4-piperidineamine moiety that has only hydrogen or carbon as the atom directly bonded to the nitrogen atom.

The content of the additional light stabilizer in the expanded layer is preferably 0.01 part by mass or more and 2 parts by mass or less, more preferably 0.05 part by mass or more and 1 part by mass or less, and further preferably 0.1 part by mass or more and 0.8 part by mass or less, per 100 parts by mass of the resin component constituting the expanded layer.

The polypropylene-based expanded beads of the present invention may be expanded beads that have only the expanded layer in the form of particles, or may be expanded beads that have a multilayer structure having the expanded layer in the form of particles as a core layer and a resin layer covering the expanded layer. The expanded layer may have through-holes.

In the expanded beads having a multilayer structure, the resin layer may cover the entire surface of the expanded layer, or may cover a part of the surface of the expanded layer.

Examples of the resin component constituting the cover layer include a polyethylene resin and a polypropylene resin. The melting point of the resin component constituting the cover layer is preferably lower than the melting point of the resin component constituting the expanded layer. The cover layer is preferably in a non-expanded state.

The ratio of the mass of the resin component constituting the expanded layer and the mass of the resin component constituting the cover layer (mass of expanded layer/mass of cover layer) is preferably 99/1 to 80/20, more preferably 98/2 to 85/15, and further preferably 98/2 to 90/10.

In the cover layer, the cyclic phosphonate-based compound, the NOR type hindered amine-based compound, and the phenol-based antioxidant each may be blended in the same blending ratios as the expanded layer, may be blended in different blending ratios from the expanded layer, or may not be blended. Any one selected from the cyclic phosphonate-based compound, the NOR type hindered amine-based compound, and the phenol-based antioxidant, or two selected therefrom may be blended in the cover layer.

### [Production Method of Polypropylene Resin Expanded Beads]

The production method of the polypropylene resin expanded beads of the present invention is not particularly limited, as long as being polypropylene resin expanded beads including an expanded layer constituting the expanded beads, the expanded layer containing a polypropylene resin as a base resin, a cyclic phosphonate-based compound, and a NOR type hindered amine-based compound, the expanded layer having a blending amount of the cyclic phosphonate-based compound of 5 parts by mass or more and less than 25 parts per 100 parts by mass of the resin component constituting the expanded layer, the expanded layer having a blending amount of the NOR type hindered amine-based compound of 0.1 part by mass or more and less than 5 parts per 100 parts by mass of the resin component constituting the expanded layer, the expanded layer containing a phenol-based antioxidant, the expanded layer having a blending amount of the phenol-based antioxidant of 0.01 part by mass or more and less than 0.5 part per 100 parts by mass of the resin component constituting the expanded layer, and a ratio of the blending amount of the phenol-based antioxidant with respect to the blending amount of the NOR type hindered amine-based compound of 0.03 or more and 0.9 or less, as described above. The expanded beads can be produced, for example, by a known method of discharging polypropylene resin particles containing a blowing agent, the cyclic phosphonate-based compound, the NOR type hindered amine-based compound, and the phenol-based antioxidant dispersed in an aqueous medium in a vessel, from the vessel to an atmosphere having a pressure lower than the pressure inside the vessel, along with the aqueous medium, so as to expand the resin particles. One example of a preferred production method is described below.

A preferred production method of the polypropylene resin expanded beads of the present invention is a production method including a dispersing step of dispersing polypropylene resin particles containing the cyclic phosphonate-based compound, the NOR type hindered amine-based compound, and the phenol-based antioxidant in an aqueous medium containing an inorganic dispersant in a vessel, a blowing agent impregnating step of impregnating the polypropylene resin particles with a blowing agent in the vessel, and an expanding step of discharging the polypropylene resin particles containing the blowing agent from the vessel along with the aqueous medium, so as to expand the particles.

### (Production of Polypropylene resin particles)

The resin particles can be obtained in such a manner that the polypropylene resin, the cyclic phosphonate-based compound, the NOR type hindered amine-based compound, the phenol-based antioxidant, and the additional additives blended depending on necessity, such as the cell controlling agent, the pigment, and the ultraviolet ray absorbent, are fed to an extruder, heated and kneaded to form a resin melt, and then the resin melt is extruded from the extruder and pelletized by the strand cutting system, the hot cutting system, the underwater cutting system, or the like.

The average mass per one particle (arithmetic average per one particle calculated by measuring the mass of 200 randomly selected particles) of the resin particles is preferably 0.1 to 20 mg, more preferably 0.2 to 10 mg, further preferably 0.3 to 5 mg, still further preferably 0.4 to 2 mg. The outer shape of the particles is not specifically limited, so long as falling within a range capable of achieving the object of the present invention, and is a columnar shape in the strand cutting system.

In the case where the outer shape of the resin particles is a columnar shape, the particle diameter (length in the extrusion direction) of the resin particles is preferably 0.1 to 3.0 mm, and more preferably 0.3 to 1.5 mm. The ratio of the length in the extrusion direction of the resin particles to the length in the direction perpendicular to the extrusion direction of the resin particles (diameter of the resin particles) (length/diameter ratio) is preferably 0.5 to 5.0, and more preferably 1.0 to 3.0.

In the strand cutting method, the particle diameter, the length/diameter ratio, and the average mass of the resin particles can be regulated by cutting the strand while appropriately changing the extrusion rate, the pulling rate, and the cutter speed in extruding the resin melt.

### (Production of Polypropylene Resin Expanded Beads)

A preferred production method of the polypropylene resin expanded beads of the present invention includes a dispersing step of dispersing polypropylene resin particles containing the cyclic phosphonate-based compound, the NOR type hindered amine-based compound, and the phenol-based antioxidant in an aqueous medium containing an inorganic dispersant in a vessel, a blowing agent impregnating step of impregnating the polypropylene resin particles with a blowing agent in the vessel, and an expanding step of discharging the polypropylene resin particles containing the blowing agent from the vessel along with the aqueous medium, so as to expand the particles, and preferably includes these steps in this order. The steps of the preferred production method of the polypropylene resin expanded beads are described below.

### (Dispersing Step)

The dispersing medium used for dispersing the resin particles in the closed vessel is preferably an aqueous dispersing medium. The aqueous dispersing medium is a dispersing medium that contains water as a major component. The proportion of water in the aqueous dispersing medium is preferably 70% by mass or more, more preferably 80% by mass or more, further preferably 90% by mass or more, and may be 100% by mass. Examples of the dispersing medium other than water in the aqueous dispersing medium include ethylene glycol, glycerin, methanol, and ethanol.

In the dispersing step, a dispersant is preferably added to the dispersing medium for preventing the polypropylene resin particles heated in the vessel from being fusion bonded. The dispersant may be any material that is capable of preventing polypropylene resin particles from being fusion bonded in the vessel, and any of an organic dispersant and an inorganic dispersant can be used, in which an inorganic dispersant is preferred, and a fine particulate inorganic dispersant is more preferred in view of the handleability. Examples thereof include a natural or synthetic clay mineral, such as kaolin, mica, and clay, aluminum oxide, titanium oxide, basic magnesium carbonate, basic zinc carbonate, calcium carbonate, and iron oxide, and one kind thereof may be used, or two or more kinds thereof may be used in combination. Among these, a natural or synthetic clay mineral is preferably used as the dispersant. The amount of the dispersant added is preferably 0.001 to 5 parts by mass per 100 parts by mass of the resin particles.

In the case where the dispersant is used, an anionic surfactant, such as sodium dodecylbenzenesulfonate, sodium alkylsulfonate, and sodium oleate, is preferably used in combination therewith, as a dispersing aid. The dispersing aid is preferably added to the aqueous medium in an amount of approximately 0.001 to 1 part by mass per 100 parts by mass of the resin particles.

### (Blowing Agent Impregnating Step)

The blowing agent used for expanding the polypropylene resin particles is preferably a physical blowing agent. Examples of the physical blowing agent include an inorganic physical blowing agent and an organic physical blowing agent, and examples of the inorganic physical blowing agent include carbon dioxide, air, nitrogen, helium, and argon. Examples of the organic physical blowing agent include an aliphatic hydrocarbon, such as propane, n-butane, isobutane, n-pentane, isopentane, hexane, cyclopentane, and cyclohexane, and a halogenated hydrocarbon, such as chlorofluoromethane, trifluoromethane, 1,1-difluoroethane, 1-chloro-1,1-difluoroethane, 1,1,1,2-tetrafluoroethane, methyl chloride, ethyl chloride, and methylene chloride. The physical blowing agent may be used alone as the blowing agent, or a mixture of two or more thereof may be used. An inorganic physical blowing agent and an organic physical blowing agent can be used in combination. The blowing agent is preferably an inorganic physical blowing agent, and more preferably carbon dioxide, from the standpoint of the environmental load, and of further enhancing the flame retardancy of the expanded beads molded article.

The amount of the blowing agent added is preferably 0.1 to 30 parts by mass, and more preferably 0.5 to 15 parts by mass, per 100 parts by mass of the resin particles.

The method used for impregnating the resin particles with the blowing agent is preferably a method of dispersing the resin particles in an aqueous dispersing medium in a closed vessel, then injecting the blowing agent under pressure into the closed vessel, and keeping the closed vessel at a prescribed temperature under a prescribed pressure, so as to impregnate resin particles with the blowing agent.

### (Expanding Step)

The pressure (internal pressure) inside the closed vessel in expanding, i.e., the pressure inside the vessel immediately before discharging the resin particles along with the aqueous medium, is preferably 0.5 MPa(G) or more, and more preferably 0.8 MPa(G) or more. The upper limit thereof is preferably 4 MPa(G) or less, and more preferably 3 MPa(G) or less. Within the range, the intended expanded beads can be safely produced without risk of breakage, explosion, or the like of the closed vessel. It is also preferred that the closed vessel is heated to 100 to 200°C, and more preferably 130 to 160°C, and kept at the temperature for approximately 5 to 30 minutes, and then the resin particles containing the blowing agent are discharged from the closed vessel to an atmosphere having a lower pressure than the pressure inside the closed vessel (for example, an atmospheric pressure), so as to expand the resin particles.

The polypropylene resin expanded beads obtained in the manner described above can be converted to expanded beads having a higher expansion ratio (having a low bulk density) by pressurizing with air or the like to increase the pressure inside the cells of the expanded layer (internal pressure), and then further expanding by heating with steam or the like (two-step expanding).

### [Expanded Beads Molded Article]

The expanded beads molded article of the present invention is obtained through in-mold molding of the polypropylene resin expanded beads.

The expanded beads molded article of the present invention is an in-mold molded article of the polypropylene resin expanded beads.

Specifically, the expanded beads molded article of the present invention is an expanded beads molded article obtained through in-mold molding of polypropylene resin expanded beads including an expanded layer constituting the expanded beads, the expanded layer containing a polypropylene resin as a base resin, a cyclic phosphonate-based compound, and a NOR type hindered amine-based compound, the expanded layer having a blending amount of the cyclic phosphonate-based compound of 5 parts by mass or more and less than 25 parts by mass per 100 parts by mass of the resin component constituting the expanded layer, the expanded layer having a blending amount of the NOR type hindered amine-based compound of 0.1 part by mass or more and less than 5 parts by mass per 100 parts by mass of the resin component constituting the expanded layer, the expanded layer containing a phenol-based antioxidant, having a blending amount of the phenol-based antioxidant of 0.01 part by mass or more and less than 0.5 part by mass per 100 parts by mass of the resin component constituting the expanded layer, having a ratio of the blending amount of the phenol-based antioxidant with respect to the blending amount of the NOR type hindered amine-based compound of 0.03 or more and 0.9 or less.

The in-mold molding method can be performed by filling a mold with the expanded beads, and heat-molding the expanded beads. Specifically, after filling the mold with the expanded beads, the expanded beads are heated to perform secondary expanding thereof and simultaneously fusion bonding thereof, and thereby the expanded beads molded article having the shape of the mold cavity is obtained. Examples of the method of heating the expanded beads include a method of introducing a heating medium, such as steam, into the mold, and heating the expanded beads with the heating medium, a method of heating the expanded beads by irradiating the expanded beads with an electromagnetic wave, such as microwave, and a method combining these methods. The method used for filling the mold with the expanded beads may be a known method. Examples of the filling method include a method of pressurizing the expanded beads with a pressurizing gas to impart a prescribed internal pressure to the expanded beads, and then filling the mold therewith (pressure filling method), a method of filling the pressurized mold with the expanded beads having been compressed with a pressurizing gas, and then releasing the pressure in the mold (compression filling method), a method of opening the mold to spread the mold cavity in advance before filling the mold with the expanded beads, and after filling, closing the mold to compress the expanded beads mechanically (cracking filling method), and a filling method combining these methods.

The density of the expanded beads molded article of the present invention is preferably 10 g/L or more and 300 g/L or less, more preferably 20 g/L or more, further preferably 30 g/L or more, still further preferably 40 g/L or more, and still more further preferably 50 g/L or more, and is more preferably 120 g/L or less, further preferably 90 g/L or less, still further preferably 80 g/L or less, still more further preferably 70 g/L or less, and even further preferably 63 g/L or less. Accordingly, the density thereof is more preferably 20 g/L or more and 120 g/L or less, further preferably 30 g/L or more and 90 g/L or less, still further preferably 40 g/L or more and 80 g/L or less, still more further preferably 50 g/L or more and 90 g/L or less, and even further preferably 50 g/L or more and 63 g/L or less.

The density of the expanded beads molded article can be calculated by dividing the mass of the expanded beads molded article by the volume thereof calculated based on the dimension thereof.

The expanded beads molded article of the present invention has excellent fusion bonding properties and excellent flame retardancy, and therefore can be favorably applied to applications requiring high flame retardancy, such as a protective material for on-board batteries and electronic components.

### EXAMPLES

The present invention will be described in more detail with reference to examples below, but the present invention is not limited to the examples.

### [Measurement and Evaluation]

The expanded beads and the expanded beads molded articles of Examples and Comparative Examples were measured and evaluated in the following manner. The expanded beads and the expanded beads molded articles were evaluated after conditioning by allowing to stand under condition of a relative humidity of 50%, 23°C, and 1 atm, for 2 days.

### <Bulk Density of Expanded Beads>

Approximately 500 cm³ of a group of expanded beads were charged in a measuring cylinder, and the bulk height of the expanded beads group in the measuring cylinder was stabilized by lightly tapping a few times the bottom of the measuring cylinder against the floor face. The bulk volume of the expanded beads group that the scale of the measuring cylinder indicated was read, and was designated as V1 (L). The mass of the expanded beads group was measured, and was designated as W1 (g).

The mass W1 (g) of the expanded beads was divided by the volume V1 thereof (W1/V1), and the unit thereof was converted to (kg/m³) to provide the bulk density of the expanded beads.

### <Heat of Fusion of High-temperature Peak of Expanded Beads>

The heat of fusion of high-temperature peak of the expanded beads was measured by the heat flux differential scanning calorimetry according to JIS K 7122-2012. Specifically, approximately 2 mg of the expanded beads were sampled, and measured by heating from 23°C to 200°C at 10°C/min to provide a DSC curve having one or more melting peaks, using a differential scanning calorimeter (DSC7020, available from Hitachi High-Tech Science Corporation). In the following description, the resin-intrinsic peak is represented by A, and the high-temperature peak appearing on the higher temperature side thereof is represented by B.

A straight line (α-β) connecting a point α corresponding to 80°C on the DSC curve and a point β corresponding to the melting end temperature T of the expanded beads on the DSC curve was drawn. The melting end temperature T is the endpoint on the high temperature side at the high-temperature peak B, and is the intersection point of the high-temperature peak and the base line on the high-temperature side. Next, a straight line parallel to the vertical axis of the graph was drawn from the point γ on the DSC curve corresponding to the valley between the resin-intrinsic peak A and the high-temperature peak B, and the point crossing the straight line (α-β) was designated as δ.

The area of the high-temperature peak B is the area of the portion surrounded by the curve part of the high-temperature peak B on the DSC curve, the line segment (δ-β), and the line segment (γ-δ), and designated as the heat of fusion of the high-temperature peak.

### <Evaluation of Fusion Bonding Properties>

The expanded beads molded article was fractured by bending, and the number (C1) of the expanded beads existing on the fracture surface and the number (C2) of the broken expanded beads were obtained, from which the ratio of the broken expanded beads with respect to the expanded beads (C2/C1 × 100) was calculated as a material breakage rate. The measurement was performed 5 times using fresh test pieces to obtain the material breakage rates respectively, which were evaluated according to the following evaluation standard.

### Evaluation Standard

A: Material breakage rate of 60% or more
B: Material breakage rate of 40% or more and less than 60%
C: Material breakage rate of less than 40%

### <Evaluation of Flame Retardancy (UL94 Flammability Test)>

The flame retardancy of the expanded beads molded article was evaluated by the result of the vertical flame test (20 mm vertical flame test) performed according to the UL94 Standard. The specific test method was as follows.

### (Preparation of Test Sample)

Five test pieces having a dimension of 125 mm in length, 13 mm in width, and 13 mm in thickness were cut out from the vicinity of the center portion of the expanded beads molded article to make all the faces of the test piece to be a cut surface.

### (Evaluation Standard)

The evaluation was performed by V-0, V-1, and V-2 of the UL94 Standard. A case that did not satisfy V-0, V-1, and V-2 of the UL94 Standard was evaluated as rejected.

### <Density of Expanded Beads Molded Article>

The expanded beads molded article was allowed to stand under condition of a relative humidity 50%, 23°C and 1 atm for 2 days. The mass thereof was then measured and designated as W (g).

The volume V (cm³) of the expanded beads molded article was measured based on the dimension of the expanded beads molded article.

The mass W (g) of the expanded beads molded article was divided by the volume V thereof (W/V), the unit thereof was converted to (kg/m³) to provide the density of the expanded beads molded article.

### [Materials]

The materials used in Examples and Comparative Examples are shown below.

### (Polypropylene Resin)

PP1: Ethylene-propylene random copolymer, melting point: 143°C, ethylene component amount: 2.1% by mass, MFR (load: 2.16 kg, 230°C, JIS K 7210-1:2014): 6 g/10 min, polydispersity (Mw/Mn): 9.4

PP2: Ethylene-propylene random copolymer, melting point: 134°C, ethylene component amount: 3.5% by mass, MFR (load: 2.16 kg, 230°C, JIS K 7210-1:2014): 5 g/10 min, polydispersity (Mw/Mn): 5.0

PP3: High-melt tension polypropylene, melting point: 159°C, MFR (load: 2.16 kg, 230°C, JIS K 7210-1:2014): 1.7 g/10 min, melt tension: 390 mN (the maximum value immediately before the fracture of the drawn strand recorded at a drawing rate increasing from the initial rate of 0 m/min to 200 m/min over 4 minutes at a constant rate, measurement temperature: 230°C, measurement device: Capilograph 1D, available from Toyo Seiki Seisaku-sho, Ltd., orifice nozzle diameter: 2.095 mm, orifice length: 8.0 mm, pulley diameter: 45 mm)

### (Polyethylene Resin)

PE1: Linear low density polyethylene, melting point: 120°C, density: 0.923 cm/cm³, MFR (load: 2.16 kg, 190°C, JIS K 7210-1:2014): 1.5 g/10 min

### (Cyclic Phosphonate-based Compound)

PCO900: "Aflammit PCO900", trade name, available from Thor Group, melting point: 240°C, compound represented by formula (6) below

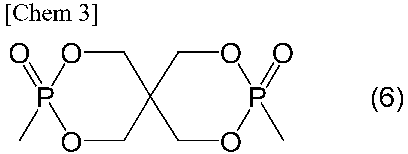

### (NOR type Hindered Amine-based Compound)

NOR116: "Flamestab NOR116", trade name, available from BASF SE, compound represented by formula (7) below, molecular weight: 2,261

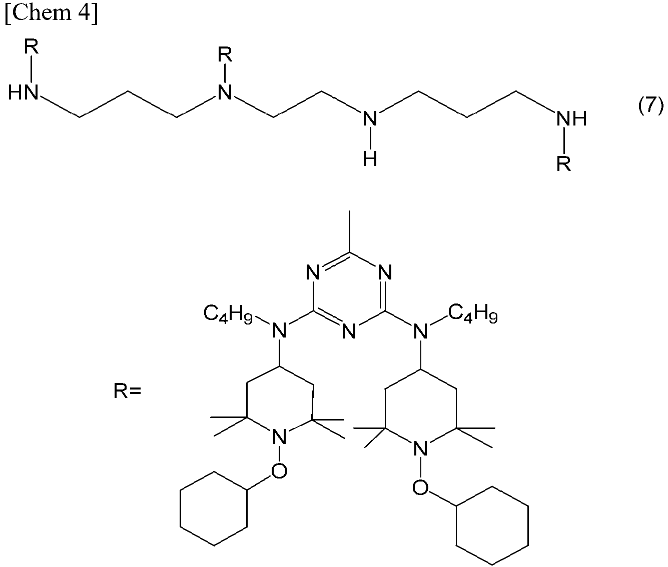

### (Phenol-based Antioxidant)

1330: "Irganox 1330", trade name, available from BASF SE, melting point: 245°C, compound represented by formula (8) below

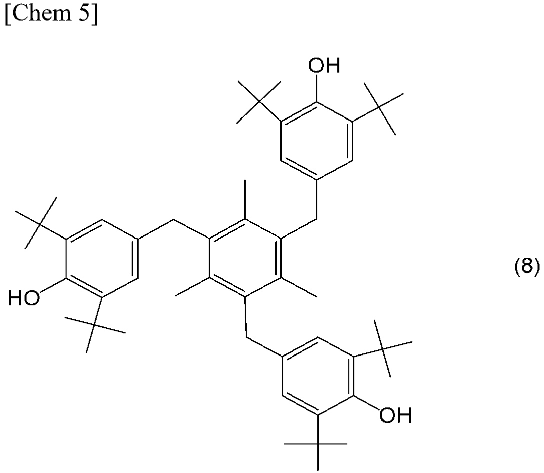

1010: "Irganox 1010", trade name, available from BASF SE, melting point: 120°C, compound represented by formula (9) below

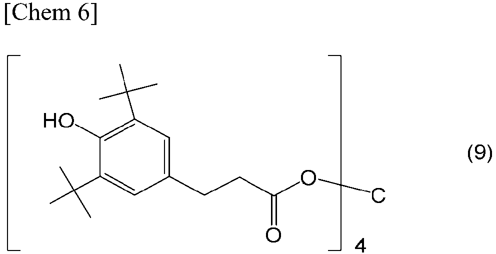

### (Sulfur-based Antioxidant)

Dioctadecyl 3,3'-thiodipropionate: "Irganox PS 802", trade name, available from BASF SE

### [Production of Polypropylene Resin Expanded Beads and Expanded Beads Molded Article]

### (Example 1)

An extruder with an inner diameter of 50 mm having a strand-forming die provided on the discharge side thereof was prepared.

PP1, zinc borate (number-based arithmetic average particle diameter: 9 µm), PCO900, NOR116, 1330, and the sulfur-based antioxidant were fed to the extruder to make the blending amounts shown in Table 1, and melt-kneaded to form a resin melt.

The resulting resin melt was extruded as a strand through the strand-forming die, and the extruded strand was cooled in water, and cut with a pelletizer to provide polypropylene resin particles having an average mass per particle of 1.0 mg.

20 kg of the polypropylene resin particles, 60 L of water as a dispersing medium, 80 g of a dispersant, 40 g of a surfactant, and 2 g of a dispersing aid were charged in a 100 L autoclave.

Carbon dioxide as a blowing agent was then injected under pressure into the autoclave, which was pressurized to a gauge pressure of 0.5 MPa(G). The contents of the closed vessel were then heated to the expanding temperature shown in Table 1 at a heating rate of 2°C/min while agitating the contents. Carbon dioxide was then injected under pressure into the closed vessel to make the pressure shown in Table 1 (expanding pressure) in terms of gauge pressure, and then the temperature and the pressure were kept for 15 minutes. Thereafter, the contents of the autoclave were discharged to an atmospheric pressure, so as to expand the polypropylene resin particles, and thus polypropylene resin expanded beads were obtained. The measurement results, such as the properties of the resulting polypropylene resin expanded beads, are shown in Table 1.

The mold used was a plate-forming separable mold having an inner dimension of 400 mm in length × 300 mm in width × 30 mm in thickness in the completely closed state.

After performing an exhausting step, the mold was opened from the completely closed state by 3 mm in the thickness direction, and in this state, the expanded beads were charged in the mold. After completing the charging, the mold was completely closed (cracking amount: 3 mm, 10%). Thereafter, an expanded beads molded article in the form of plate was obtained through cracking molding of heating the expanded beads by feeding steam into the mold. The heating with steam was performed in the following manner. Steam was fed into the mold in the state where the drain valves on both sides of the mold were opened (exhausting step). Steam was then fed into the mold from one side of the mold in the state where the drain valve on the opposite side of the mold was opened (one side heating step), and then steam was fed from the other side of the mold in the state where the drain valve on the opposite side of the mold was opened (opposite side heating step). Subsequently, steam was fed from both sides of the mold in the state where the drain valves of both sides of the mold were closed, until the interior of the mold reached the molding steam pressure shown in Table 1 (both sides heating step). After completing the both sides heating step, the pressure was released, water cooling was performed for 20 seconds, and then water cooling was further performed until the pressure occurring on the molding surface of the mold (surface pressure) through the secondary expanding force of the expanded beads molded article reached 0.05 MPa(G), followed by opening the separable mold and taking out the molded article from the mold. The molded article taken out from the mold was aged in an oven at 80°C for 12 hours, and then gradually cooled to room temperature.

The results of the density, the evaluation of the fusion bonding properties, the evaluation of the flame retardancy of the resulting expanded beads molded article are shown in Table 1.

### (Examples 2 to 7 and Comparative Examples 1 to 5)

Polypropylene resin expanded beads were obtained in the same manner as in Example 1 except that the amounts of the components were changed to make the blending amounts of the components shown in Tables 1 and 3 per 100 parts by mass of the resin component constituting the expanded layer. The measurement results, such as the properties of the resulting polypropylene resin expanded beads, are shown in Tables 1 and 3.

An expanded beads molded article was obtained in the same manner as in Example 1 except that the polypropylene resin expanded beads obtained herein were used, and the molding steam pressure was regulated to the steam pressure shown in Tables 1 and 3. The results of the density, the evaluation of the fusion bonding properties, the evaluation of the flame retardancy of the resulting expanded beads molded article are shown in Tables 1 and 3.

### (Example 8)

Polypropylene resin expanded beads were obtained in the same manner as in Example 6 except that 1330 as the phenol-based antioxidant was changed to 1010. The measurement results, such as the properties of the resulting polypropylene resin expanded beads, are shown in Table 2.

An expanded beads molded article was obtained in the same manner as in Example 6 by using the polypropylene resin expanded beads obtained herein. The results of the density, the evaluation of the fusion bonding properties, and the evaluation of the flame retardancy of the resulting expanded beads molded article are shown in Table 2.

### (Example 9)

A production apparatus equipped with a core layer forming extruder having an inner diameter of 50 mm, a cover layer forming extruder having an inner diameter of 30 mm, and a co-extrusion die for forming a multilayer strand including a core layer in the form of cylinder and a cover layer covering the side surface of the core layer was prepared.

PP1, zinc borate (number-based arithmetic average particle diameter: 9 µm), PCO900, NOR116, 1330, and the sulfur-based antioxidant were fed to the core layer forming extruder to make the blending amounts shown in Table 2, and melt-kneaded to form a resin melt for forming a core layer.

Only PP2 was fed to the cover layer forming extruder, and melt-kneaded to form a resin melt for forming a cover layer.

The resin melt for forming a core layer and the resin melt for forming a cover layer thus obtained were introduced to the co-extrusion die for forming a multilayer strand, combined inside the die, and extruded from the co-extrusion die into a multilayer strand having a two-layer structure (cover layer/core layer structure) including a core layer in the form of cylinder and a cover layer covering the side surface of the core layer. The ratio of the cover layer and the core layer was regulated to 3/97 in terms of mass ratio. The extruded strand was cooled in water, and cut with a pelletizer to provide polypropylene resin particles having an average mass per one particle of 1.0 mg having a two-layer structure including a core layer in the form of cylinder and a cover layer covering the side surface of the core layer.

Polypropylene resin expanded beads having a multilayer structure including an expanded layer and a cover layer were obtained from the resulting polypropylene resin particles in the same manner as in Example 1. At this time, the core layer of the resin particles was expanded and became the expanded layer in the form of particles, and the cover layer became a resin layer in the non-expanded state. The measurement results, such as the properties of the resulting polypropylene resin expanded beads, are shown in Table 2.

An expanded beads molded article was obtained in the same manner as in Example 1 by using the polypropylene resin expanded beads obtained herein. The results of the density, the evaluation of the fusion bonding properties, and the evaluation of the flame retardancy of the resulting expanded beads molded article are shown in Table 2.

### (Example 10)

Polypropylene resin expanded beads were obtained in the same manner as in Example 1 except that the polypropylene resin PP1 and the polypropylene resin PP3 were fed at a mass ratio of 85/15 (PP1/PP3) instead of the polypropylene resin PP1. The measurement results, such as the properties of the resulting polypropylene resin expanded beads, are shown in Table 2.

### (Example 11)

Polypropylene resin expanded beads were obtained in the same manner as in Example 1 except that the polypropylene resin PP1 and the polyethylene resin PE1 were fed at a mass ratio of 85/15 (PP1/PE1) instead of the polypropylene resin PP1. The measurement results, such as the properties of the resulting polypropylene resin expanded beads, are shown in Table 2.

### (Example 12)

Polypropylene resin expanded beads were obtained in the same manner as in Example 1 except that conductive carbon black (Ketjen Black EC300J, trade name, available from Lion Corporation) as a conductive filler was fed to make the blending amount shown in Table 2. The measurement results, such as the properties of the resulting polypropylene resin expanded beads, are shown in Table 2.

### (Example 13)

Polypropylene resin expanded beads were obtained in the same manner as in Example 1 except that PTFE powder (polytetrafluoroethylene fibrils, Metablen A-3800, trade name, available from Mitsubishi Chemical Corporation) as a filler was fed to make the blending amount shown in Table 2. The measurement results, such as the properties of the resulting polypropylene resin expanded beads, are shown in Table 2.

### [Table 1]

**Table 1**

| | | | | Example 1 | Example 2 | Example 3 | Example 4 | Example 5 | Example 6 | Example 7 |
|---|---|---|---|---|---|---|---|---|---|---|
| Resin particles | Structure of resin particles | | | Single laver | Single laver | Single laver | Single laver | Single laver | Single laver | Single laver |
| | Resin of cover layer | | | - | - | - | - | - | - | - |
| | Resin of expanded layer | | | PP1 | PP1 | PP1 | PP1 | PP1 | PP1 | PP1 |
| | Additives of expanded layer | Cyclic phosphonate-based compound | Blending amount (part by mass) | 9.9 | 15 | 22 | 15 | 15 | 22 | 22 |
| | | | Melting point T_{A} (°C) | 240 | 240 | 240 | 240 | 240 | 240 | 240 |
| | | NOR type hindered amine-based compound | Blending amount (part by mass) | 0.5 | 0.5 | 0.5 | 1.2 | 2.5 | 2.5 | 3.8 |
| | | Phenol-based antioxidant | Blending amount (part by mass) | 0.1 | 0.1 | 0.1 | 0.1 | 0.2 | 0.2 | 0.4 |
| | | | Melting point T_{B} (°C) | 245 | 245 | 245 | 245 | 245 | 245 | 245 |
| | | T_{A}-T_{B} (°C) | | -5 | -5 | -5 | -5 | -5 | -5 | -5 |
| | | Blending amount of sulfur-based antioxidant (part by mass) | | 0.1 | 0.1 | 0.1 | 0.1 | 0.1 | 0.1 | 0.1 |
| | | Phenol-based antioxidant/NOR type hindered amine-based compound (blending amount ratio) | | 0.2 | 0.2 | 0.2 | 0.09 | 0.08 | 0.08 | 0.11 |
| | | Sulfur-based antioxidant/NOR type hindered amine-based compound (blending amount ratio) | | 0.2 | 0.2 | 0.2 | 0.09 | 0.04 | 0.04 | 0.03 |
| | | Additional additives (part by mass) | Zinc borate | 0.05 | 0.05 | 0.05 | 0.05 | 0.05 | 0.05 | 0.05 |
| | | | Conductive carbon black | - | - | - | - | - | - | - |
| | | | PTFE powder | - | - | - | - | - | - | - |
| Expanded beads | | Expanding temperature (°C) | | 150 | 151 | 151 | 152 | 152 | 152 | 151 |
| | | Expanding pressure (MPaG) | | 2.8 | 2.5 | 2.5 | 2.1 | 2.1 | 2.0 | 2.3 |
| | | High temperature peak (J/g) | | 18 | 16 | 15 | 13 | 14 | 12 | 14 |
| | | Density (g/L) | | 55 | 55 | 60 | 68 | 69 | 80 | 68 |
| Molded article | | Molding steam pressure (MPaG) | | 0.32 | 0.32 | 0.32 | 0.32 | 0.32 | 0.34 | 0.32 |
| | | Fusion bonding properties | | A | A | A | A | A | B | B |
| | | Evaluation of UL94 flame retardancy | | V-2 | V-2 | V-2 | V-2 | V-2 | V-2 | V-0 |
| | | Density of molded article (g/L) | | 60 | 60 | 65 | 75 | 75 | 90 | 75 |

### [Table 2]

**Table 2**

| | | | | Example 8 | Example 9 | Example 10 | Example 11 | Example 12 | Example 13 |
|---|---|---|---|---|---|---|---|---|---|
| Resin particles | Structure of resin particles | | | Single layer | Multilayer | Single layer | Single layer | Single layer | Single layer |
| | Resin of cover layer | | | - | PP2 | - | - | - | - |
| | Resin of expanded layer | | | PP1 | PP1 | PP1+PP3 | PP1+PE1 | PP1 | PP1 |
| | Additives of expanded layer | Cyclic phosphonate-based compound | Blending amount (part by mass) | 22 | 15 | 15 | 15 | 15 | 15 |
| | | | Melting point T_{A} (°C) | 240 | 240 | 240 | 240 | 240 | 240 |
| | | NOR type hindered amine-based compound | Blending amount (part by mass) | 3.8 | 0.5 | 0.5 | 0.5 | 0.5 | 0.5 |
| | | Phenol-based antioxidant | Blending amount (part by mass) | 0.4 | 0.1 | 0.1 | 0.1 | 0.1 | 0.1 |
| | | | Melting point T_{B} (°C) | 120 | 245 | 245 | 245 | 245 | 245 |
| | | T_{A}-T_{B} (°C) | | 120 | -5 | -5 | -5 | -5 | -5 |
| | | Blending amount of sulfur-based antioxidant (part by mass) | | 0.1 | 0.1 | 0.1 | 0.1 | 0.1 | 0.1 |
| | | Phenol-based antioxidant/NOR type hindered amine-based compound (blending amount ratio) | | 0.1 | 0.2 | 0.2 | 0.2 | 0.2 | 0.2 |
| | | Sulfur-based antioxidant/NOR type hindered amine-based compound (blending amount ratio) | | 0.03 | 0.2 | 0.2 | 0.2 | 0.2 | 0.2 |
| | | Additional additives (part by mass) | Zinc borate | 0.05 | 0.05 | 0.05 | 0.05 | 0.05 | 0.05 |
| | | | Conductive carbon black | - | - | - | - | 2 | - |
| | | | PTFE powder | - | - | - | - | - | 2 |
| Expanded beads | | Expanding temperature (°C) | | 151 | 152 | 151 | 151 | 151 | 151 |
| | | Expanding pressure (MPaG) | | 2.3 | 2.3 | 2.5 | 2.5 | 2.5 | 2.5 |
| | | High temperature peak (J/g) | | 14 | 13 | 15 | 16 | 17 | 15 |
| | | Density (g/L) | | 68 | 55 | 90 | 90 | 90 | 55 |
| Molded article | | Molding steam pressure (MPaG) | | 0.32 | 0.32 | 0.36 | 0.34 | 0.36 | 0.32 |
| | | Fusion bonding properties | | B | A | A | A | A | A |
| | | Evaluation of UL94 flame retardancy | | V-2 | V-2 | V-2 | V-2 | V-2 | V-2 |
| | | Density of molded article (g/L) | | 75 | 60 | 100 | 100 | 100 | 60 |

### [Table 3]

**Table 3**

| | | | | Comparative Example 1 | Comparative Example 2 | Comparative Example 3 | Comparative Example 4 | Comparative Example 5 |
|---|---|---|---|---|---|---|---|---|
| | Structure of resin particles | | | Single layer | Single layer | Single layer | Single layer | Single layer |
| | Resin of cover layer | | | - | - | - | - | - |
| | Resin of expanded layer | | | PP1 | PP1 | PP1 | PP1 | PP1 |
| | | Cyclic phosphonate-based compound | Blending amount (part by mass) | 15 | 15 | 15 | 4 | 28 |
| | | | Melting point T_{A} (°C) | 240 | 240 | 240 | 240 | 240 |
| | | NOR type hindered amine-based compound | Blending amount (part by mass) | 5.0 | 0.5 | 6.0 | 0.5 | 0.5 |
| | | Phenol-based antioxidant | Blending amount (part by mass) | 0.1 | 0.5 | 0.6 | 0.1 | 0.1 |
| Resin particles | Additives of expanded layer | | Melting point T_{B} (°C) | 245 | 245 | 245 | 245 | 245 |
| | | T_{A}-T_{B} (°C) | | -5 | -5 | -5 | -5 | -5 |
| | | Blending amount of sulfur-based antioxidant (part by mass) | | 0.1 | 0.1 | 0.1 | 0.1 | 0.1 |
| | | Phenol-based antioxidant/NOR type hindered amine-based compound (blending amount ratio) | | 0.02 | 1 | 0.1 | 0.2 | 0.2 |
| | | Sulfur-based antioxidant/NOR type hindered amine-based compound (blending amount ratio) | | 0.02 | 0.2 | 0.02 | 0.2 | 0.2 |
| | | Additional additives (part by mass) | Zinc borate | 0.05 | 0.05 | 0.05 | 0.05 | 0.05 |
| | | | Conductive carbon black | - | - | - | - | - |
| | | | PTFE powder | - | - | - | - | - |
| Expanded beads | | Expanding temperature (°C) | | 151 | 151 | 151 | 150 | 152 |
| | | Expanding pressure (MPaG) | | 2.5 | 2.5 | 2.5 | 2.9 | 2.1 |
| | | High temperature peak (J/g) | | 16 | 16 | 16 | 16 | 16 |
| | | Density (g/L) | | 55 | 55 | 55 | 55 | 55 |
| Molded article | | Molding steam pressure (MPaG) | | 0.32 | 0.32 | 0.32 | 0.32 | 0.32 |
| | | Fusion bonding properties | | C | A | C | A | C |
| | | Evaluation of UL94 flame retardancy | | V-2 | rejected | V-2 | rejected | V-2 |
| | | Density of molded article (g/L) | | 60 | 60 | 60 | 60 | 60 |

It is understood from the results shown in Tables 1 and 2 that the expanded beads molded articles of Examples have excellent fusion bonding properties and a V-2 or higher level for the flammability by the UL-94 Standard, which shows excellent flame retardancy. It is understood therefrom that the polypropylene resin expanded beads of the present invention can produce an expanded beads molded article excellent in flame retardancy and fusion bonding properties, and the polypropylene resin expanded beads molded article of the present invention is excellent in flame retardancy and fusion bonding properties.

## Claims

1. A polypropylene resin expanded bead comprising an expanded layer constituting the expanded bead,
the expanded layer containing a polypropylene resin as a base resin, a cyclic phosphonate-based compound, and a NOR type hindered amine-based compound,
the expanded layer having a blending amount of the cyclic phosphonate-based compound of 5 parts by mass or more and less than 25 parts by mass per 100 parts by mass of a resin component constituting the expanded layer,
the expanded layer having a blending amount of the NOR type hindered amine-based compound of 0.1 part by mass or more and less than 5 parts by mass per 100 parts by mass of a resin component constituting the expanded layer,
the expanded layer containing a phenol-based antioxidant,
the expanded layer having a blending amount of the phenol-based antioxidant of 0.01 part by mass or more and less than 0.5 part by mass per 100 parts by mass of a resin component constituting the expanded layer,
a ratio of a blending amount of the phenol-based antioxidant with respect to a blending amount of the NOR type hindered amine-based compound is of 0.03 or more and 0.9 or less.

2. The polypropylene resin expanded bead according to claim 1, wherein the ratio of the blending amount of the phenol-based antioxidant with respect to the blending amount of the NOR type hindered amine-based compound is 0.07 or more and 0.9 or less.

3. The polypropylene resin expanded bead according to claim 1, wherein the ratio of the blending amount of the phenol-based antioxidant with respect to the blending amount of the NOR type hindered amine-based compound is 0.14 or more and 0.9 or less.

4. The polypropylene resin expanded bead according to any one of claims 1 to 3, wherein the blending amount of the NOR type hindered amine-based compound in the expanded layer is 0.1 part by mass or more and 3.5 parts by mass or less per 100 parts by mass of the resin component constituting the expanded layer.

5. The polypropylene resin expanded bead according to any one of claims 1 to 4, wherein the phenol-based antioxidant has a melting point Tm_{A} of 200°C or more and less than 300°C.

6. The polypropylene resin expanded bead according to any one of claims 1 to 5, wherein the cyclic phosphonate-based compound has a melting point Tm_{B} of 200°C or more and less than 300°C, and a melting point difference (Tm_{A}-Tm_{B}) between the melting point Tm_{A} of the phenol-based antioxidant and the melting point Tm_{B} of the cyclic phosphonate-based compound is -50°C or more and 50°C or less.

7. The polypropylene resin expanded bead according to any one of claims 1 to 6, wherein the cyclic phosphonate-based compound is a pentaerythritol diphosphonate.

8. The polypropylene resin expanded bead according to any one of claims 1 to 7, wherein the expanded layer contains a sulfur-based antioxidant, and a blending amount of the sulfur-based antioxidant in the expanded layer is 0.01 part by mass or more and 0.5 part by mass or less per 100 parts by mass of the resin component constituting the expanded layer.

9. The polypropylene resin expanded bead according to claim 8, wherein the expanded layer has a ratio of a blending amount of the NOR type hindered amine-based compound with respect to a blending amount of the sulfur-based antioxidant of 0.03 or more and 0.9 or less.

10. An expanded beads molded article comprising the polypropylene resin expanded bead according to any one of claims 1 to 9 in-mold molded.
